# EUROPÄISCHE PATENTSCHRIFT

(11) **EP 1 401 682 B1**
(45) Veröffentlichungstag und Bekanntmachung des Hinweises auf die Patenterteilung: **17.11.2004**
(21) Anmeldenummer: 02747183.8
(22) Anmeldetag: 31.05.2002
(51) Int. Cl.: B60R 21/01

(54) **ANORDNUNG ZUR SENSIERUNG EINES FRONTAUFPRALLS BEI EINEM FAHRZEUG**
ASSEMBLY FOR SENSING A FRONTAL IMPACT IN A VEHICLE
DISPOSITIF DE DETECTION D'UN CHOC FRONTAL D'UN VEHICULE

(30) Priorität: 06.06.2001 DE 10127326; 07.08.2001 DE 10138764
(43) Veröffentlichungstag der Anmeldung: 31.03.2004
(73) Patentinhaber: ROBERT BOSCH GMBH, 70442 Stuttgart (DE)
(72) Erfinder: KLEINSCHMIDT, Simone, Farminghton Hills ,MI 48331 (US); ROELLEKE, Michael, 71229 Leonberg-Hoefingen (DE); KOEHLER, Armin, 74343 Sachsenheim (DE)
(86) Internationale Anmeldenummer: PCT/DE2002/001984
(87) Internationale Veröffentlichungsnummer: WO 2002/098708

(56) Entgegenhaltungen:
- GB-A- 2 293 681
- PATENT ABSTRACTS OF JAPAN vol. 014, no. 407 (M-1019), 4. September 1990 (1990-09-04) -& JP 02 155862 A (MAZDA MOTOR CORP), 14. Juni 1990 (1990-06-14)

## Beschreibung

### Stand der Technik

Es ist bereits aus der Offenlegungsschrift GB 22 93 681 A bekannt, einen Upfront-Sensor zur Plausibilisierung der Auslöseentscheidung des zentralen Steuergeräts für Rückhaltesysteme zu verwenden.

Die Erfindung geht aus von einer solchen Anordnung zur Sensierung eines Frontaufpralls bei einem Fahrzeug, die den Oberbegriff des unabhängigen Anspruchs entpricht, mit den Merkmalen des kennzeichnenden Teils des unabhängigen Patentanspruchs.

### Vorteile der Erfindung

Die erfindungsgemäße Anordnung zur Sensierung eines Frontaufpralls bei einem Fahrzeug hat demgegenüber den Vorteil, daß eine logische ODER-Verknüpfung eines Beschleunigungs- und Geschwindigkeitssignals des Upfront-Sensors zur Plausibilisierung einer Auslöseentscheidung, die im zentralen Steuergerät getroffen wird, durchgeführt wird. Diese ODER-Verknüpfung führt zu einer höheren Zuverlässigkeit der Plausibilitätsentscheidung. Bei langsamen Frontal-Crashes und weichen Crashes unterstützt das integrierte Upfront-Signal, also die Geschwindigkeit, die Auslösung durch den Auslöseralgorithmus. Das heißt bei diesen Crashes existiert eine unterste Upfront-Integratorschwelle für den Gurtstraffer, die zeitgleich oder vor der Auslöseentscheidung durch das Zentralgerät überschritten wird. Diese Schwelle oder eine knapp darunter liegende kann für die Plausibilität verwendet werden. Die Funktion dieser Plausibilitätsschwelle ist durch den Upfront-Algorithmus gewährleistet. Die zweite Upfront-Plausibilitätsschwelle, welche sich auf das Beschleunigungssignal bezieht, benötigt man für schnelle, harte Crashes, welche über das zentrale Steuergerät schon zu einem Zeitpunkt auslösen, zu dem der Upfront-Sensor noch nicht getroffen wurde und somit keinen zufriedenstellenden Integratorstand erreicht hat. Durch den Aufprall sind im Upfront-Sensor zu dieser Zeit jedoch schon starke Beschleunigungs-Schwingungsimpulse zu sehen, welche sich für eine Plausibilität verwenden lassen. Damit wird durch die logische ODER-Verknüpfung erreicht, daß beide Fälle, ein langsamer Frontal-Crash und ein harter Frontal-Crash durch den Plausibilitätssensor als auslöserelevant erkannt werden. Dies führt zu einer höheren Sicherheit des gesamten Rückhaltesystems.

Durch die in den abhängigen Ansprüchen aufgeführten Maßnahmen und Weiterbildungen sind vorteilhafte Verbesserungen der im unabhängigen Patentanspruch angegebenen Anordnung zur Sensierung eines Frontalaufpralls bei einem Fahrzeug möglich.

Besonders vorteilhaft ist, daß das Plausibilitätssignal, das das Ergebnis der Beschleunigung oder Geschwindigkeit, verglichen mit den jeweiligen Schwellen ist, für eine gewisse Zeit zwischengespeichert wird, um auch bei einem kurzfristigen Ausfall des Upfront-Sensors noch zur Verfügung zu stehen. Auch dies ermöglicht eine höhere Sicherheit, auch wenn der Upfront-Sensor beispielsweise bei einem Frontal-Crash bereits zerstört wurde.

Darüber hinaus ist es von Vorteil, daß das Steuergerät bei einem Signal des wenigstens einen Aufprallsensors im Steuergerät selbst unterhalb einer vorgegebenen Schwelle die Auslösung der Rückhaltemittel hemmt. Dies trifft insbesondere für die Rauschwelle zu, das heißt, wenn das Signal des Aufprallsensors im Steuergerät so klein ist, daß es sich noch im Rauschen befindet, wird auf eine Auslösung der Rückhaltemittel verzichtet.

Wenn jedoch das Signal des Aufprallsensors im Steuergerät über der Rauschschwelle liegt und das zwischengespeicherte Plausibilitätssignal über der jeweiligen Plausibilisierungsschwelle liegt, dann ist das Steuergerät prinzipiell auslösebereit und eine vom Algorithmus geforderte Auslöseentscheidung wird nicht unterdrückt, sondern führt zu einer Auslösung der Rückhaltemittel.

### Zeichnung

Ausführungsbeispiele der Erfindung sind in der Zeichnung dargestellt und werden in der nachfolgenden Beschreibung näher erläutert. Es zeigt
Figur 1 eine Ansicht wo die Aufprallsensoren angeordnet sind,
Figur 2 ein erstes Blockschaltbild der erfindungsgemäßen Anordnung,
Figur 3 ein Beschleunigungs-Zeit-Diagramm,
Figur 4 ein Geschwindigkeits-Zeit-Diagramm und
Figur 5 ein Blockschaltbild zur Ermittlung des Plausibilitätssignals.

### Beschreibung

Im Allgemeinen wird, um die Sicherheit einer Auslöseentscheidung eines Airbag-Steuergeräts zu erhöhen, neben dem Beschleunigungssensor im Steuergerät ein weiterer Plausibilitätssensor eingesetzt. Dieser Plausibilitätssensor kann im Steuergerät aber auch dezentral beispielsweise als Upfront-Sensor verwendet werden. Dabei sind auch entsprechende Kombinationen möglich. Als Beschleunigungssensoren werden hier piezoelektrische Sensoren bzw. mikromechanische Halbleitersensoren eingesetzt. Es sind jedoch noch weitere Sensortypen möglich.

Erfindungsgemäß wird nun eine Anordnung zur Sensierung eines Frontalaufpralles vorgeschlagen, bei dem das Plausibilitätssignal durch einen Upfront-Sensor erzeugt wird. Das Plausibilitätssignal wird in Abhängigkeit vom Beschleunigungssignal und dem Geschwindigkeitssignal, also dem integrierten Beschleunigungssignal, erzeugt. Dabei wird eine logische ODER-Verknüpfung der Vergleiche des Beschleunigungs- und Geschwindigkeitssignal mit den jeweiligen Schwellen durchgeführt. In einer Weiterbildung ist vorgesehen, daß das Plausibilitätssignal, also das Ergebnis der ODER-Verknüpfung, für eine gewisse Zeit zwischengespeichert wird, beispielsweise 10 ms, um auch bei einem Ausfall des Plausibilitätssensors, beispielsweise durch Zerstörung bei einem Frontalaufprall, noch für eine gewisse Zeit ein Plausibilitätssignal bereitzustellen. Weiterhin wird überprüft, ob das Signal des im Steuergerät angeordneten Aufprallsensors, also auch des Beschleunigungssensors, unterhalb der Rauschschwelle liegt. Ist das der Fall, dann wird der Auslösealgorithmus nicht gestartet und somit eine Auslösung der Rückhaltemittel gehemmt. Der Auslösealgorithmus wird jedoch gestartet, sofern dieses Signal über der Rauschwelle liegt. Ist dazu noch das aktuelle Plausibilitätssignal oder das zwischengespeicherte Plausibilitätssignal vorhanden, ist das Steuergerät auslösebereit. Bei einer Auslöseentscheidung durch den Algorithmus kommt es zu einer Auslösung der Rückhaltemittel.

Der Begriff Aufprallsensor wird hier als Oberbegriff verwendet, während Upfrontsensor einen Aufprallsensor in der Fahrzeugfront in der Regel in der Knautschzone bezeichnet. Im allgemeinen werden als Aufprallsensoren Beschleunigungssensoren verwendet. Es sind jedoch auch Dehnungssensoren, Druck- und Temperatursensoren möglich.

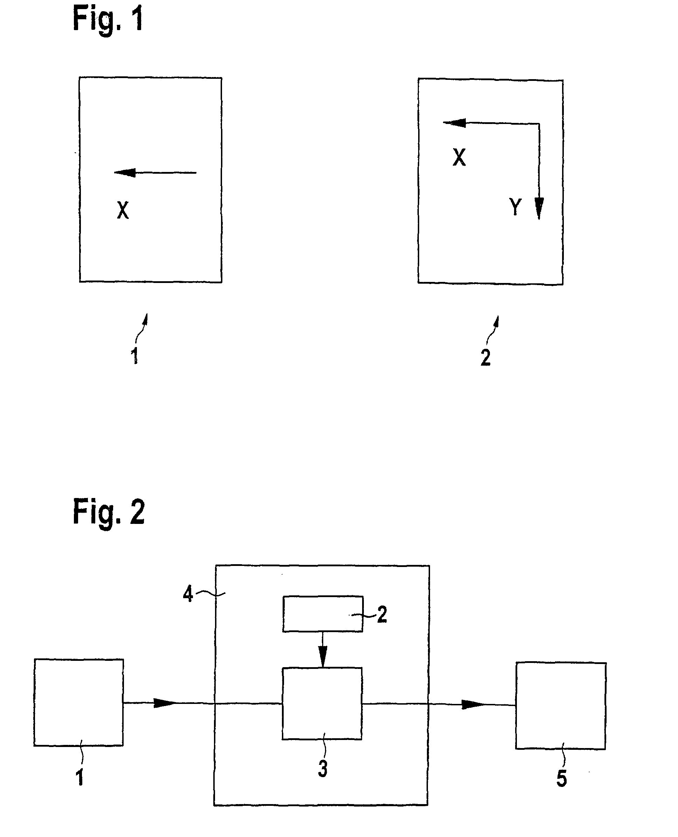

Figur 1 zeigt in einer Übersicht wo der im Steuergerät angeordnete Beschleunigungssensor und der Upfront-Sensor in einem Fahrzeug angeordnet sind. Ein Upfront-Sensor 1 sensiert Beschleunigungen in X-Richtung, also hier in Längsrichtung des Fahrzeugs. Im Steuergerät ist jedoch eine Beschleunigungssensoranordnung zur Aufpralldetektion angeordnet, die Beschleunigungen sowohl in X-Richtung als auch in Y-Richtung, also in Fahrzeugquerrichtung ermittelt. Damit sind dann auch Seitenaufpralle erkennbar. Der Upfront-Sensor 1 ist an geeigneten Stellen im Fahrzeug anzuordnen. Dafür eignen sich beispielsweise der Kühlerträger oder der Motorhaubenschloßträger.

Figur 2 zeigt als Blockschaltbild eine erfindungsgemäße Anordnung. Die Anordnung weist den Upfront-Sensor 1, ein Steuergerät 4 mit der Beschleunigungssensoranordnung 2 und mit einem Prozessor 3 sowie einer Verbindung zu Rückhaltemitteln 5 auf.

Der Upfront-Sensor 1 ist über eine Leitung, beispielsweise über eine solche Leitung, über die er auch seine Energie erhält, mit dem Prozessor 3 verbunden. Damit ist dann eine Power-Line-Kommunikation möglich. Das heißt, die zu dem Sensor 1 übertragene Energie wird für die Sensordaten moduliert.

Am zweiten Dateneingang des Prozessors 3 ist die Beschleunigungssensoranordnung 2 angeschlossen. Über einen Datenausgang ist der Prozessor 3 mit Rückhaltemitteln 5, also Gurtstraffern und Airbags verbunden. Die Rückhaltemittel 5 weisen dazu Zündkreise auf, um diese Rückhaltemittel 5 bei einem erkannten Crash auszulösen. Die Sensoren 1 und 2 weisen eine Signalverarbeitung auf, die die Beschleunigungssignale verstärkt und digitalisiert. Der Prozessor 3 rechnet dann in Abhängigkeit von den Aufprallsensoren 1 und 2 gesendeten Signalen einen Auslösealgorithmus, um zu ermitteln, ob die Rückhaltemittel 5 zu zünden sind. Diesem Auslösealgorithmus können feste Schwellen für die Sensorsignale und/oder auch adaptiv berechnete Schwellen verwendet werden. Durch die Verwendung des Beschleunigungs- und des Geschwindigkeitsingnals ist es möglich, weiche und harte Crashes zu erkennen. Bei weichen Crashes ist es möglicherweise nur notwendig, einen Gurtstraffer zu zünden, während bei harten Crashes im Prinzip auch Airbags gegebenenfalls zu zünden sind. Die Ansteuerung der Rückhaltemittel 5 ist weiterhin in Abhängigkeit von einer Personenerkennung durchzuführen. Das heißt, es muß auch erkannt werden, ob Personen sich auf jeweiligen Fahrzeugsitzen befinden und ob für diese Personen Rückhaltemittel zu zünden sind, ohne sie zu gefährden.

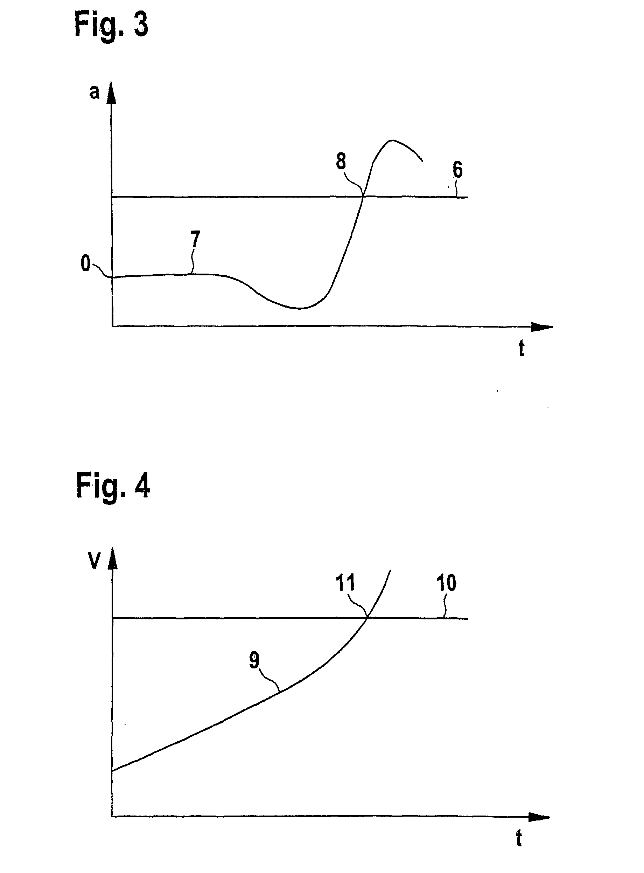

Figur 3 zeigt ein Beschleunigungs-Zeit-Diagramm eines Beschleunigungssignals, das vom Upfront-Sensor 1 geliefert wird. Der Upfront-Sensor 1, von dem auch mehrere angeordnet sein können, liefert ein Beschleunigungssignal 7, das mit einer vorgegebenen Schwelle 6 verglichen wird. Zum Zeitpunkt 8 überschreitet das Signal 7 die Beschleunigungsschwelle 6.

Zu diesem Zeitpunkt wird hier ein harter Crash erkannt und ein entsprechendes Plausibilitätssignal ist an den Prozessor 3 zu übertragen oder der Prozessor 3 ermittelt aus dem übertragenen Beschleunigungssignal 7, daß die Plausibilitätsbedingungen für harte Crashes erfüllt wurden. Damit ergeben sich die Alternativen, daß der Beschleunigungssensor 1 nur Sensordaten an den Prozessor 3 überträgt oder schon das ausgewertete Plausibilitätssignal. Das ausgewertete Plausibilitätssignal sagt aus, ob zumindest eine Schwelle, Beschleunigung und Geschwindigkeit, von dem Upfrontsensorsignal überschritten wurde.

Figur 4 zeigt ein Geschwindigkeits-Zeit-Diagramm, in dem das integrierte Beschleunigungssignal, also das Geschwindigkeitssignal mit der Schwelle 10 verglichen wird. Zum Zeitpunkt 11 wird auf die Erfüllung der Plausibilitätsbedingung erkannt, also liegt ein weicher Crash vor. Auch dies wird entweder durch den Prozessor 3 oder eine entsprechende Elektronik im Sensor 1 ermittelt.

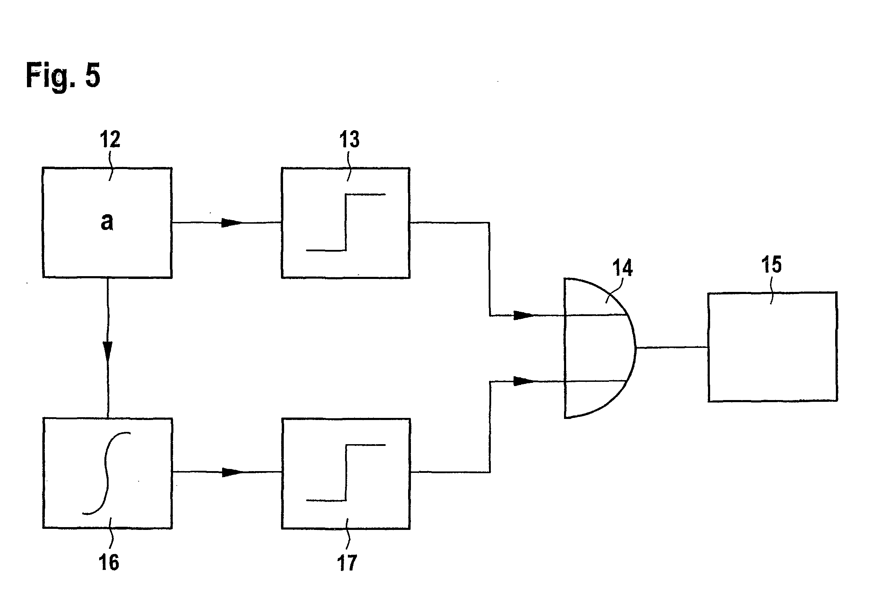

Figur 5 zeigt nun wie die Signalverarbeitung auf Blockschaltbildebene bezüglich der Plausibilitätssignale abläuft. Im Block 12 wird das Beschleunigungssignal a von dem Beschleunigungssensor 1 erzeugt. Dieses Beschleunigungssignal a wird im Block 13 mit der Schwelle 6 verglichen, wo bei Überschreiten der Schwelle 6 ein Plausibilitätssignal erzeugt wird, das in eine ODER-Verknüpfung 14 als erste Eingangsgröße eingeführt wird. Das Beschleunigungssignal a wird jedoch im Block 16 auch integriert, so daß ein Geschwindigkeitssignal erzeugt wird. Dieses Geschwindigkeitessignal wird dann im Block 17 mit der Schwelle 10 verglichen. Das Ausgangssignal des Block 17, also ob auch die Schwelle 10 überschritten wurde oder nicht, wird in das ODER-Gatter 14 als die zweite Eingangsgröße eingeführt. Ist wenigstens eine der beiden Schwellen 6 oder 10 überschritten, dann wird im Block 15 ein Plausibilitätssignal erzeugt, das dazu verwendet wird, um zu entscheiden, ob eine vom Auslösealgorithmus getroffene Auslöseentscheidung auch zur physikalischen Auslösung der Rückhaltemittel führt oder nicht. Dies hängt dann vom Beschleunigungssignal der Beschleunigungssensoranordnung 2 ab.

Das Plausibilitätssignal im Block 15 wird für eine vorgegebene Zeit zwischengespeichert, beispielsweise 10ms, um auch bei einem Ausfall des Upfront-Sensors 1 für eine gewisse Zeit zur Verfügung zu stehen um gegebenenfalls den Auslösealgorithmus bei Vorliegen eines Plausibilitätssignals auszulösen. Vorliegen heißt hier, dass das Plausiblitätssignal einen Crash anzeigt.

## Patentansprüche

1. Anordnung zur Sensierung eines Frontaufpralls bei einem Fahrzeug, wobei die Anordnung wenigstens einen Aufprallsensor in einem Steuergerät (4) und wenigstens einen Aufprallsensor (1) in der Fahrzeugfront als Upfront-Sensor aufweist, wobei der wenigstens eine Upfront-Sensor (1) als Plausibilitätssensor für den Aufprallsensor (2) im Steuergerät (4) verwendbar ist, **dadurch gekennzeichnet, daß** das Steuergerät (4) sowohl ein Beschleunigungssignal (7) als auch ein Geschwindigkeitssignal (9) des wenigstens einen Upfront-Sensors (1) mit jeweiligen Plausibilisierungsschwellen (6, 10) zur Erzeugung eines Plausibilitätssignals vergleicht, wobei das Steuergerät (4) eine logische ODER-Verknüpfung (14) von Ergebnissen der beiden Vergleiche durchführt.

2. Anordnung nach Anspruch 1, **dadurch gekennzeichnet, daß** das Steuergerät (4) das Plausibilitätssignal für eine vorgegebene Zeit zwischenspeichert und das zwischengepeicherte Plausibilitätssignal für die vorgehende Zeit für eine Auslöseentscheidung von Rückhaltemitteln (5) verwendet.

3. Anordnung nach Anspruch 1 oder 2, **dadurch gekennzeichnet, daß** das Steuergerät (4) bei einem Signal des wenigstens einen Aufprallsensors (2) im Steuergerät (4) unterhalb einer vorgegebenen Schwelle eine Auslösung der Rückhaltemittel (5) hemmt.

4. Anordnung nach Anspruch 1 oder 2, **dadurch gekennzeichnet, daß** das Steuergerät beim Ausfall des Upfront-Sensors (1) während des Crashes mit zuvor ermittelter und gespeicherter Plausibilisierung durch den Upfront-Sensor (1) und einem Signal des wenigstens einen Aufprallsensors (2) im Steuergerät (4) über der vorgegebenen Schwelle einen Auslösealgorithmus im Steuergerät (4) startet, wobei dann eine vom Auslösealgorithmus ermittelte Auslöseentscheidung zur Auslösung der Rückhaltemittel führt.

## Claims

1. Arrangement for sensing a frontal impact in a vehicle, the arrangement having at least one impact sensor in a control device (4) and at least one impact sensor (1) in the front of the vehicle as an upfront sensor, it being possible to use the at least one upfront sensor (1) as a plausibility sensor for the impact sensor (2) in the control device (4), **characterized in that** the control device (4) compares both an acceleration signal (7) and a speed signal (9) of the at least one upfront sensor (1) with respect to plausibility thresholds (6, 10) for generating a plausibility signal, the control device (4) carrying out a logic OR operation (14) on results of the two comparisons.

2. Arrangement according to Claim 1, **characterized in that** the control device (4) buffers the plausibility signal for a predefined time and uses the buffered plausibility signal for the preceding time for a triggering decision of restraint means (5).

3. Arrangement according to Claim 1 or 2, **characterized in that**, when a signal of the at least one impact sensor (2) in the control device (4) is below a predefined threshold, the control device (4) impedes triggering of the restraint means (5).

4. Arrangement according to Claim 1 or 2, **characterized in that**, when the upfront sensor (1) fails during the crash with previously determined and stored plausibility checking by the upfront sensor (1) and with a signal of the at least one impact sensor (2) in the control device (4) above the predefined threshold, the control device starts a triggering algorithm in the control device (4), a triggering decision which is determined by the triggering algorithm then causing the restraint means to trigger.

## Revendications

1. Dispositif de détection d'un choc frontal d'un véhicule comprenant au moins un capteur de collision dans un appareil de commande (4) et au moins un capteur de collision (1) dans l'avant du véhicule comme capteur frontal dont l'au moins le capteur frontal (1) est utilisable comme capteur de plausibilité pour le capteur de collision (2) dans l'appareil de commande (4),
**caractérisé en ce que**
l'appareil de commande (4) compare à la fois un signal d'accélération (7) et un signal de vitesse (9) de l'au moins un capteur frontal (1) avec chaque fois des seuils de plausibilité (6, 10) pour générer un signal de plausibilité, l'appareil de commande (4) effectuant une combinaison logique (OU) (14) des résultats de deux comparaisons.

2. Dispositif selon la revendication 1,
**caractérisé en ce que**
l'appareil de commande (4) enregistre de façon intermédiaire le signal de plausibilité pendant une durée prédéterminée et utilise le signal de plausibilité, enregistré de façon intermédiaire pour la durée prédéterminée, pour prendre une décision de déclenchement des moyens de retenue (5).

3. Dispositif selon la revendication 1 ou 2,
**caractérisé en ce que**
pour un signal de l'au moins un capteur de collision (2) dans l'appareil de commande (4) inférieur à un seuil prédéterminé, l'appareil de commande (4) bloque le déclenchement des moyens de retenue (5).

4. Dispositif selon la revendication 1 ou 2,
**caractérisé en ce que**
en cas de défaillance du capteur frontal (1), pendant la collision, l'appareil de commande lance un algorithme de déclenchement dans l'appareil de commande (4) pendant la collision, avec un contrôle de plausibilité déterminé préalablement et enregistré par le capteur frontal (1) et si un signal de l'au moins un capteur de collision (2) dépasse le seuil prédéterminé dans l'appareil de commande (4),
et ensuite une décision de déclenchement déterminée par l'algorithme de déclenchement produit le déclenchement des moyens de retenue.
